# EUROPEAN PATENT APPLICATION

(11) **EP 2 346 089 A1**
(43) Date of publication of application: **20.07.2011**
(21) Application number: 10000278.1
(22) Date of filing: 13.01.2010
(51) Int. Cl.: H01L 31/042, H01L 31/048

(54) **Solar panel assembly having alignment means**

(71) Applicant: SolarWorld Korea Co., Ltd., Yeoksam-dong, Gangnam-gu Seoul (KR)
(72) Inventor: Park, Hyun Woo, Yeoksam-dong Gangnam-gu Seoul (KR)
(74) Representative: Kurig, Thomas

(57) **Abstract**

There is disclosed a solar panel assembly (10) comprising a solar panel frame (10) for framing a solar module, said frame (10) including connecting bars (2,4,6,8) connected by corner pieces (12,14,16,18), each said corner piece (12,14,16,18) having upper and lower faces which are provided with mating female and male alignment means (20;30) such that the male alignment means is adapted to engage the female alignment means of a corner piece of an adjacent upper or lower second solar panel assembly.

## Description

The present invention relates generally to mounting solar (photovoltaic, i.e. PV) panels on top of each other, in a stack, for transporting them in a safe and stable manner. After decomposing the stack, the invention provides particularly for mounting a plurality of solar panels in an array, such as upon a roof and the like in a manner which promotes the longevity and reliability of the solar panels, while collecting solar energy in a cost-effective manner.

Solar panel frame assemblies comprising a solar panel including solar cells / wafers and a surrounding panel frame for protecting the solar panel have been manufactured in large quantities. After manufacture, the solar panel assemblies are provided in stacks of up to 30 assemblies, conventionally, for shipping and transporting purposes. Hence, it is important to align the modules when piling them up to provide a compact and shock resistant arrangement

### BACKGROUND OF THE INVENTION

Photovoltaic modules, which convert sunlight into electrical power, are available in thin sheets of a rigid material, such as glass, plastic, metal, or some combination of these, and typically measure from one to four feet in width and one to six feet in length. A number of such modules or panels typically are formed into arrays and mounted onto the roof of a building, with the electrical outputs of the array combined and processed before being used on site or fed into an electrical power grid.

Typically, glass solar modules are either, a) framed in aluminum, or b) installed without frames (also known as laminates). One aspect commonly found with aluminum-framed modules is that the support structures for the modules often require additional grounding wires or other safety measures depending upon the installation configuration and local building codes. In addition, the non-framed photovoltaic modules (referred to as laminates above) are prone to edge chipping and cracking and in some cases the entire glass module has been known to break.

Current applications are also difficult to ship and install and in addition have inherent disadvantages and negative impacts upon the roof, including multiple roof penetrations and inadequate air circulation behind the solar panel which promotes unwanted vegetative mold growth on the roof and does not allow the solar panel to operate at cooler temperatures. Current applications also often require additional metal structural components to support the photovoltaic panels that require grounding wires to operate safely and in addition require a significant amount of time and labor to penetrate the roof and install support structures on the roof and then seal the roof penetrations. Hence, it is important to provide solar panel assemblies with a minimum number of constituent parts.

US 7,487,771 B1 discloses a solar panel frame assembly comprising a solar panel and a surrounding frame composed of several elements.

US 4,027,987 provides a joining device for connecting tubes. Such joining device, however, is incapable of providing a solar panel frame.

US 2008/0110487 discloses a solar panel frame adapted to accommodate a plurality of rod-shaped solar modules. This arrangement, however, does not provide a solar panel frame for large one-piece integral solar glass panels having built-in solar cells including interconnected solar wafers.

US 4,205,486 discloses a sash structure formed by sections and square connection elements for potential application to solar panels.

Usually, plastic caps have been used for attachment to the outer faces of the four corner pieces of the solar panel assemblies such that a cap is attached to a corner piece of a first assembly and protrudes in vertical direction towards the next module to provide a guidance and centering function to the next module.

These plastic caps involve the disadvantage of accidentally falling off the module so that centering function is impaired. Further, the caps do not provide a full centering fuction for heavy modules exceeding certain weight ranges.

In another stacking mode there are disposed sheets or layers of paperboard or cardboard between adjacent solar panel assemblies to avoid intimate contact between them. These paperboard layers however increase the dimensional thickness of the stacked assemblies and are insufficient to protect them against frictional wear and abrasion.

For these reasons it is an object of the present invention to provide a solar panel assembly having an alignment means which provides a stable and force resistant function of stacking up a large quantity of assemblies or modules. It is a further object of the invention to provide a solar panel asembly with an in-built alignment means which can be easily manufactured in a cost efficient manner.

### SUMMARY OF THE INVENTION

In accordance with the present invention there is provided a solar panel assembly or module having a solar panel including solar cells, the solar panel being surrounded by a frame, the frame including connecting bars connected by corner pieces, each said corner piece having upper and lower faces which are provided with mating female and male alignment means such that the male alignment means is adapted to engage the female alignment means of a corner piece of an adjacent second solar panel assembly.

With the present invention solar assemblies or modules can be easily piled up, one upon the other with the alignment means of one module engaging the mating alignment means of the next ie upper or lower solar module. The alignment means can be provided into the corner pieces by press moulding, die forming, casting or carving, as known in the art. The alignment means provide an easy way of stacking up to 40 solar modules one on top of the other.

In a preferred embodiment of the solar module the plane from which the male alignment means of the corner piece projects and extends vertically is forming an elevated shoulder or raised step with respect to the adjacent connecting bar, such that the corner pieces upper face projects over the adjacent bars and stacked solar modules do only contact each other at the corner pieces, but do not contact each other at the connecting bars. Similarly, the opposing lateral face of the corner piece comprising the female alignment means does preferably not comprise an elevated shoulder or raised step.

The male alignment means in an embodiment of the invention does comprise an arbitrary geometrical shape such as a protruding flower shape, whereas the mating female alignment means provides for a the complementary (negative) shape which fits the male alignment means upon engagement of the two alignment means without leaving a gap or opening between them. In the stacked position of the solar assemblies or modules the upper and lower planes of corner pieces of adjacent solar modules from which the male and female alignment means are raised or depressed, respectively, abut each other without a gap between them.

In a preferred embodiment the female alignment means comprise depressions and the lateral faces from which the depressions extend are registering with the connecting bars so that the lower solar assembly or module of a pile is providing a stable quadrangular support basis of the pile. Hence, with the invention, stacks of up to 40 and even 50 solar assemblies or modules may be attained.

In a preferred embodiment the lateral outer faces of the connecting bars are provided with grooves and ribs, respectively, for providing a matched joint or a form-fit. In detail, one connecting bar of a solar module is provided with a groove on its outer surface, while the opposing connecting bar of the same module is provided with a matching rib on its outer surface, wherein rib and groove are mating. In this fashion, adjacent solar assemblies equipped with grooves and ribs may engage each other, in a stable manner. This embodiment is adapted to provide for an easy mounting of the solar modules one to the side of the other one, horizontally, in the operating position, after deassembling the stack. Especially, when mounting the solar panel assembly on a roof, the solar panel assemblies can be attached with ease one to the other one, horizontally

### DESCRIPTION OF PREFERRED EMBODIMENTS

In the following the invention will be described with reference to the attached drawings which merely provide illustrations of the invention in a non-limiting way.
FIG. 1 depicts a perspective view of an embodiment of the solar panel assembly according to the invention.
FIG. 2 is a top plan view of the embodiment of FIG. 1.
FIG. 3 is side view of the embodiment of FIG 1, taken along the longer connecting bar.
FIG. 4 is side view of the embodiment of FIG 1, taken along the shorter connecting bar.
FIG. 5a to c are perspective upper views of the corner piece 12, for use in an embodiment of the invention.
FIG. 6a to c are cross sectional views of the corner piece 12, partly with parts broken away, for use in an embodiment of the invention.
FIG. 7a to c are perspective lower views of the corner piece 12, for use in an embodiment of the invention

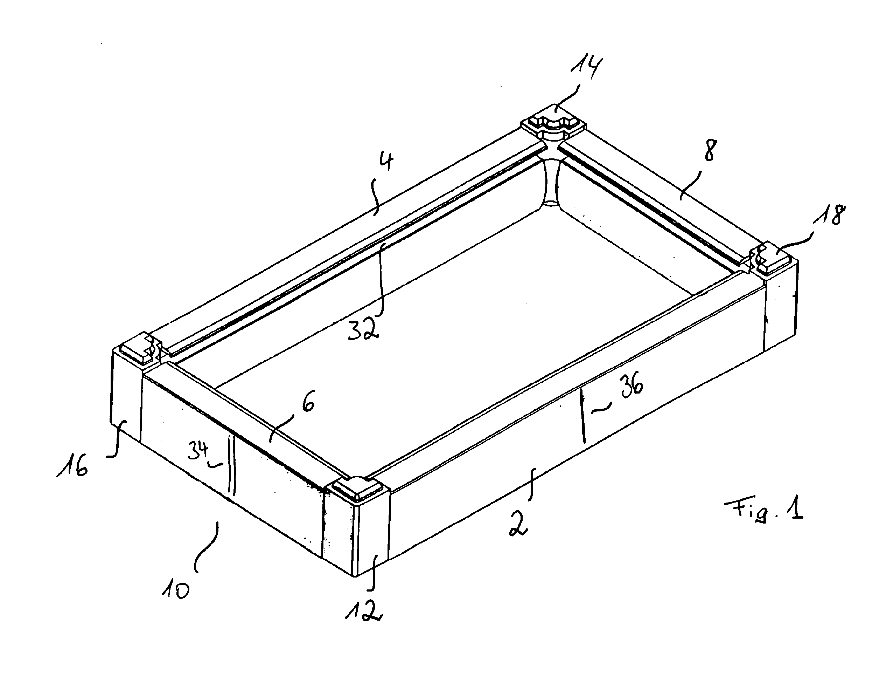

FIGS. 1, 2, 3 and 4 illustrate a solar frame assembly 10 of the present invention for framing a solar panel or module (not depicted here). FIG. 1 is intended to depict the lowest frame assembly of a plurality of frame assemblies 10 stacked one on top of the other. Once the stack is disassembled the single frame assemblies are connected to each other horizontally for connecting a plurality of adjacent solar panels 12 together to form an array of solar panels. The solar panels themselves are not shown in FIG. 1 through 7. However, it will be appreciated that each frame assembly 10 would be framing a separate solar panel as shown in FIG. 1 so that the frame assembly 10 shown in FIG. 1 would be framing one solar panel.

Turning now to FIG. 1 which provides a top plan view of a frame assembly 10 according to the invention, it will be appreciated that the frame assembly 10 comprises a plurality of elongate connecting bars (rods) 2, 4, 6 and 8 made of aluminium of varying lengths which are connected to corner pieces 12, 14, 16 and 18, respectively. In detail, there are two elongate connecting bars 2 and 4 of longer dimension and two elongate connecting bars 6 and 8 of shorter dimension so that the two longer bars and the two shorter bars are opposing each other, respectively, to build a rectangular frame 10.

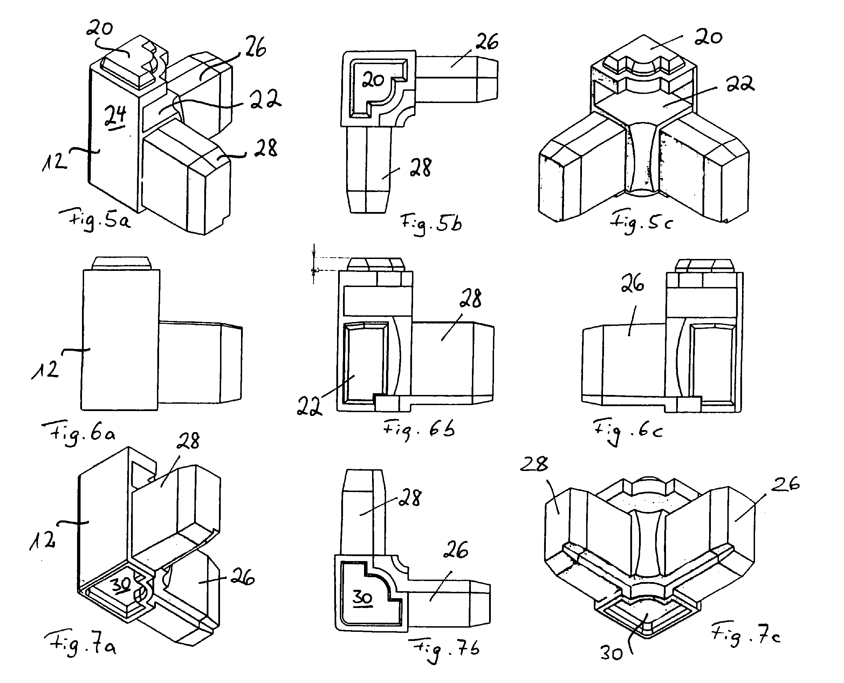

The corner pieces 12, 14, 16 and 18 provide for a connection of two adjacent bars of an assembly, with the corner piece 12 comprising an opening gap 22 to accommodate the inserted solar panel, ie the glass solar panel as an example. For this reason, and as depicted in FIG 5, the corner piece 12, similarly to the corner pieces 14, 16 and 18, comprises a body center part 24 and two fitting parts 26 and 28 connected to the body part 24, the fitting parts 26 and 28 being for insertion into corresponding openings (not shown) formed in the connecting rods 2 and 6, respectively. The connection between fitting parts and connecting bar openings may be a press fit or a connection facilitated by a connecting fluid, a glue or similar, as known in the art. The fitting parts 26 and 28 have a rectangular cross section, may be hollow, with a tapered end portion. The fitting parts 26 and 28 and the body part 24 may be integral in one piece or may be connected by some means such as welding, soldering, etc known to the skilled person.

The body portion 24 comprises an upper face shown in FIG 5 a and a lower face shown in FIG. 7a. The upper face comprises a male alignment means 20 in the form of dovetail, all in raised portions. The lower part of the body part comprises a female alignment means 30, in the form of a corresponding cut-out portion mating the male alignment means 20.

When superimposing a frame assembly 10 as depicted in FIG. 1 over another frame assembly according to FIG. 1, and so forth, a stack of frame assemblies is built, with the male alignment means of one assembly engaging the female alignment means of the upper adjacent frame assembly, with all corner pieces 12, 14, 16 and 18 engaging the corresponding upper corner pieces, with their male alignment means engaging the corresponding upper corner pieces, i.e. with their female alignment means. In this way, a pile of stacked solar assemblies is built, which can be easily packed and shipped in a safe and reliable way of handling.

FIG. 1 shows that the connecting bars each comprise a channel 32 for receiving an edge of the solar panel or solar glass it is framing. FIGS. 5 a, b and c illustrate that the corner piece 12 (and similarly 14,16,18) defines a similar channel 22 for receiving the edge of the solar panel. Accordingly, those skilled in the relevant art will appreciate that when a solar panel is completely framed with all corner pieces 12,14, 16 and 18 engaging the connecting bars, the edges of the solar panel will be received in channels 32 of the connecting bar 4 and similar channels formed in the other connecting bars 2,6 and 8 as well as opening channel 22 of the corner piece 12 and similar opening channels of the other corner pieces 14,16,18, thereby securely attaching the solar glas panel to the frame assembly.

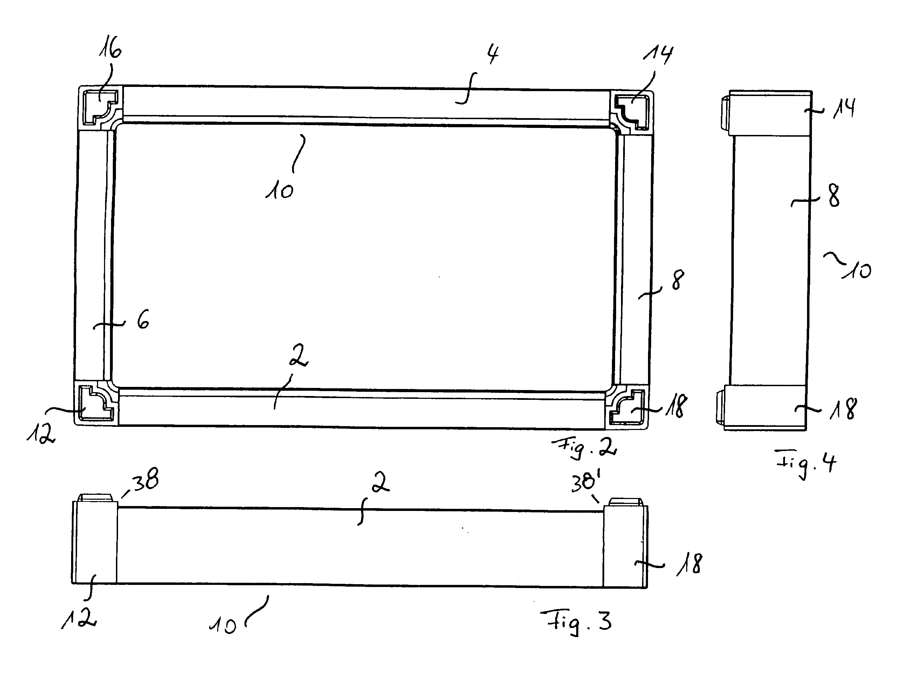

Turning now to FIGS. 3, it is shown that each corner piece 12 and 18 at its upper face projects over the plane of the adjacent connecting bar 2 by forming an elevated shoulder 38, at the corner piece 12 and an elevated shoulder 38' at the corner piece 18. Those skilled in the art will appreciate that the shoulders 38 and 38' along with corresponding shoulders built in the opposing corner pieces 16 and 14 will ensure that the solar assemblies, when arranged in a stacked position, with one assembly being on top of the other, do only touch each other in the area of the upper and lower faces of the corner pieces, respectively. The connecting bars of one assembly do not contact the connecting bars of an upper or lower assembly.

Accordingly, those skilled in the relevant art will appreciate that the corner pieces as provided in accordance with the invention can engage upper and lower corner pieces to alaign an entire array of superimposed solar panel assemblies with respect to each other. Other alignment means for interconnecting the corner pieces are also possible and are considered to be within the scope of the prevent invention. The mating shapes of the male and female alignment means also allow the solar assemblies to be nested to each other (i.e. stacked) which saves on storage space and allows more pieces to be packaged in a standard sized shipping box or stacked upon each other in a nested manner for ease, strength and security and for shipping on pallets.

The connecting bars 2, 4, 6 and 8 in another embodiment may each comprise grooves and ribs, provided in the lateral outer faces of them, for connecting and/or engaging adjacent solar assemblies on a horizontal plane. A groove 34 may be formed on the outer lateral face of the connecting bar 6, for instance, whereas a corresponding rib (not shown) is provided in the opposing lateral outer face of connecting bar 8, to engage the groove 34, when two similar solar assemblies are abutting each other side by side, on a horizontal plane. Similarly, the outer lateral face of the connecting bar 2 comprises a rib 36, while the opposing bar 4 comprises a corresponding groove, so that the rib 36 of one assembly may engage the groove of an adjacent assembly when abutting. The grooves and ribs may be tapering in cross section so that they provide a matched joint or a form-fit. In detail, one connecting bar of a solar module may be provided with a groove on its outer surface, the groove having a diameter increasing along its depth, while the opposing connecting bar of the same module is provided with a matching rib of increasing diameter along its length, so that when the rib is inserted along the length of the groove of an adjacent assembly, a reliable and fixed connection is attained. Those skilled in the art will appreciate that a locked snap fit connection can be formed accordingly.

While a preferred embodiment of the present invention has been shown and described, it is to be understood that this was done only by way of example, and not as a limitation upon the scope of the invention.

## Claims

1. Solar panel assembly (10) comprising a solar module and a solar panel frame (10) for framing said solar module, said frame (10) including connecting bars (2,4,6,8) connected by corner pieces (12,14,16,18), each said corner piece (12,14,16,18) having upper and lower faces which are provided with mating female and male alignment means (20;30) such that the male alignment means is adapted to engage the female alignment means of a corner piece of an adjacent upper or lower second solar panel assembly.

2. Solar panel assembly according to claim 1, wherein the corner piece (12,14,16,18), at the face of its male alignment means (20), is forming an elevated shoulder (38, 38') with respect to the adjacent connecting bar, such that the corner piece's upper face projects over the adjacent connecting bars and stacked solar panel assemblies do only contact each other at the corner pieces, but do not contact each other at the connecting bars.

3. Solar panel assembly according to claim 1 or 2, wherein said male alignment means (20) comprises an arbitrary geometrical shape, whereas the mating female alignment means (30) provides for a the complementary shape which fits the male alignment means (20) upon engagement of the two alignment means without leaving a gap between them.

4. Solar panel assembly according to one of the preceding claims, wherein said female alignment means (30) comprises depressions, while the face from which the depressions extend are substantially registering with the adjacent connecting bars so that the lower solar panel assembly is providing a flat support basis of a stacked number of assemblies.

5. Solar panel assembly according to one of the preceding claims, wherein the outer faces of the connecting bars (2,4,6,8) are provided with grooves (34) and ribs (36), extending longitudinally, for providing a matched joint or a form-fit, said grooves and ribs being provided in mating fashion along the outer surfaces, with the grooves of one assembly mating the ribs of an adjacent assembly, horizontally.

6. Stack of solar panel assemblies according to claim 1.

7. Corner piece for use in a solar panel assembly according to claim 1, said corner piece (12;14;16;18) having upper and lower faces which are provided with mating female and male alignment means (20;30) such that the male alignment means is adapted to engage the female alignment means of a corner piece of an adjacent upper or lower second solar panel assembly when mounted above or below said solar panel assembly.
